# EUROPÄISCHE PATENTSCHRIFT

(11) **EP 1 510 418 B1**
(45) Veröffentlichungstag und Bekanntmachung des Hinweises auf die Patenterteilung: **13.02.2008**
(21) Anmeldenummer: 03019252.0
(22) Anmeldetag: 26.08.2003
(51) Int. Cl.: B60R 21/26

(54) **Gasverteilungseinrichtung eines Luftsackmoduls**
Gas deflection device for an airbag module
Dispositif de déflection de gaz pour un module de sac gonflable de sécurité

(43) Veröffentlichungstag der Anmeldung: 02.03.2005
(73) Patentinhaber: Delphi Technologies, Inc., Troy, MI 48007 (US)
(72) Erfinder: Guthke, Detlev, 58089 Hagen (DE); Maiwald, Helmut, 51515 Kürten (DE)
(74) Vertreter: Manitz, Finsterwald & Partner GbR

(56) Entgegenhaltungen:
- DE-A- 2 360 315
- DE-A- 10 233 677
- US-A- 3 797 853
- US-A- 6 106 002
- US-A1- 2002 070 535
- ANONYMOUS: "Deformable diffuser for an air bag module" RESEARCH DISCLOSURE, KENNETH MASON PUBLICATIONS, HAMPSHIRE, GB, Bd. 391, Nr. 1, November 1996 (1996-11), XP007121366 ISSN: 0374-4353

## Beschreibung

Die Erfindung betrifft ein Luftsackmodul für Kraftfahrzeuge mit einem wenigstens eine Ausströmöffnung aufweisenden Gasgenerator und einer Gasverteilungseinrichtung, die eine Außenhülle zur zumindest teilweisen Aufnahme des Gasgenerators und wenigstens einen bei aufgenommenem Gasgenerator im Bereich der Ausströmöffnung des Gasgenerators gelegenen Gasumlenkabschnitt umfasst.

Luftsackmodule der eingangs genannten Art sind grundsätzlich bekannt und werden zum Schutz der Fahrzeuginsassen bei einem Seiten- oder Frontalaufprall des Kraftfahrzeuges eingesetzt. Bei diesen bekannten Luftsackmodulen wirkt der Gasgenerator mit der Gasverteilungseinrichtung derart zusammen, dass eine gezielte Strömungslenkung des nach dem Zünden aus dem Gasgenerator ausströmenden Gases sichergestellt ist, wobei der Gasumlenkabschnitt starr mit der Gasverteilungseinrichtung verbunden ist, so dass deren Verwendung in Abhängigkeit von den jeweiligen Anforderungen an das Luftsackmodul eingeschränkt sein kann.

Die Veröffentlichung "Deformable diffuser for an air bag module", Research Disclosure, Kenneth Mason Publications, Hampshire, GB, Bd. 391, Nr. 1, November 1996 (1996-11), XP007121366 ISSN: 0374-4353 beschreibt einen Diffusor zum Umschließen eines Gasgenerators, wobei der Diffusor aus einem einzigen Stück Stahlblech durch Rollbiegen hergestellt ist, Schlitze aufweist und beim Auslösen des Gasgenerators derart deformiert wird, dass ein Fenster gebildet wird, durch das Gas in einen Luftsack einströmen kann.

Es ist das der Erfindung zugrunde liegende Problem (Aufgabe), ein Luftsackmodul der eingangs genannten Art zu schaffen, das sich durch einen möglichst einfachen Aufbau bei gleichzeitig erhöhter Flexibilität der Gasverteilungseinrichtung hinsichtlich ihrer Einsatzmöglichkeiten auszeichnet.

Die Lösung dieser Aufgabe erfolgt durch die Merkmale des Anspruchs 1.

Bei dem erfindungsgemäßen Luftsackmodul ist vorgesehen, dass der Gasumlenkabschnitt vor dem Zünden des Gasgenerators in der Platz sparenden Montagekonfiguration vorliegt. Nach Zünden des Gasgenerators wird der Gasumlenkabschnitt mittels des ausströmenden Gases aus der Montagekonfiguration in die Betriebskonfiguration überführt. Die Betriebskonfiguration des Gasumlenkabschnitts weist dabei einen erhöhten Platzbedarf gegenüber der Montagekonfiguration auf.

Ein Vorteil des erfindungsgemäßen Luftsackmoduls besteht darin, dass der für die Unterbringung des Luftsackmoduls im Kraftfahrzeug notwendige Raumbedarf verringert werden kann. Das erfindungsgemäße Luftsackmodul zeichnet sich dadurch aus, dass trotz der Platz sparenden Montagekonfiguration des Gasumlenkabschnitts eine sichere und zuverlässige Funktionsweise des Luftsackmoduls gewährleistet ist.

Ein weiterer Vorteil des erfindungsgemäßen Luftsackmoduls ist der Gasumlenkabschnitt, der nach dem Zünden des Gasgenerators zum Aufblasen des Luftsacks in eine die gewünschte Strömungslenkung gewährleistende Betriebskonfiguration überführt werden kann, wobei der Gasumlenkabschnitt in Abhängigkeit von den jeweiligen Anforderungen an das Luftsackmodul und/oder dem jeweiligen Gasgenerator gezielt gestaltet und positioniert werden kann.

Das erfindungsgemäße Luftsackmodul besitzt weiterhin den Vorteil, dass der Gasumlenkabschnitt durch das nach dem Zünden des Gasgenerators ausströmende, ohnehin vorhandene Gas in die Betriebskonfiguration überführt werden kann.

Vorteilhafte Ausführungsformen der Erfindung sind in den Unteransprüchen, der Beschreibung und der Zeichnung angegeben.

Der Gasumlenkabschnitt ist durch Überführen in die Betriebskonfiguration in seiner äußeren Form veränderbar. Hierdurch wird ermöglicht, dass der Gasumlenkabschnitt unter bloßer Verformung und ohne das Vorsehen weiterer Mittel aus der Montagekonfiguration in die Betriebskonfiguration überführt werden kann.

Dabei ist es insbesondere bevorzugt, wenn der Gasumlenkabschnitt in der Montagekonfiguration gefaltet, gestaucht, zusammengelegt und/oder eingeklappt ist. Auf diese Weise wird erreicht, dass die Platz sparende Montagekonfiguration des Gasumlenkabschnitts auf besonders einfache Weise hergestellt werden kann.

Eine weitere vorteilhafte Ausführungsform der Erfindung zeichnet sich dadurch aus, dass die Außenhülle ring-, hülsen- oder rohrförmig ausgebildet und auf den Gasgenerator aufschiebbar ist. Hierdurch wird erreicht, dass die Gasverteilungseinrichtung mit herkömmlichen, insbesondere zigarren- oder zylinderförmig ausgebildeten Gasgeneratoren zusammenwirken kann und die Montage des Luftsackmoduls, insbesondere die zumindest teilweise Aufnahme des Gasgenerators durch die Gasverteilungseinrichtung, erleichtert wird. Die Außenhülle kann in Umfangsrichtung geschlossen oder aber auch offen, z. B. C-förmig ausgebildet sein, wobei der Öffnungswinkel der Außenhülle insbesondere kleiner als 180 Grad ist.

Des Weiteren kann erfindungsgemäß vorgesehen sein, dass die Außenhülle wenigstens ein bei aufgenommenem Gasgenerator im Bereich der Ausströmöffnung gelegenes Fenster aufweist und der Gasumlenkabschnitt im Bereich des Fensters angeordnet ist. Hierdurch wird insbesondere ermöglicht, dass das durch die Ausströmöffnung des Gasgenerators ausströmende Gas aus dem Inneren der Gasverteilungseinrichtung durch das in der Außenhülle ausgebildete Fenster nach außen und vorzugsweise in das Innere eines Luftsacks entweichen kann, wobei der Gasumlenkabschnitt das durch das Fenster strömende Gas in zumindest eine Vorzugsrichtung lenkt.

Es ist ferner vorgesehen, dass die Gasverteilungseinrichtung mehrteilig ausgeführt und der Gasumlenkabschnitt an einem separaten Halteelement ausgebildet ist, das bei zusammengesetztem Luftsackmodul innerhalb der Außenhülle angeordnet ist, wobei bevorzugt der Gasumlenkabschnitt durch ein in der Außenhülle ausgebildetes Fenster nach außen geführt ist. Die mehrteilige Ausführung der Gasverteilungseinrichtung ermöglicht einen höheren Freiheitsgrad für deren Gestaltung, da die einzelnen Teile unabhängig voneinander gefertigt werden können. Das innerhalb der Außenhülle angeordnete Halteelement ermöglicht die Halterung des Gasumlenkabschnitts, der außerhalb der Außenhülle oder im Fenster der Außenhülle angeordnet ist.

Es ist weiterhin bevorzugt, wenn das Halteelement ring- oder teilringförmig ausgebildet ist.

Um das Halteelement in Richtung der Längserstreckung der Außenhülle auf einfache Weise korrekt ausrichten zu können, kann die Außenhülle an ihrer Innenwand eine Vertiefung aufweisen, in die das Halteelement bei zusammengesetztem Luftsackmodul eingelegt ist. Die Vertiefung kann insbesondere als Ausbeulung oder Aufweitung der Außenhülle oder als ein Bereich mit reduzierter Wandstärke ausgebildet sein. Das in die Vertiefung eingelegte Halteelement kann mit der Innenwand der Außenhülle bündig abschließen, über diese hinaus nach innen vorstehen oder gegenüber der Innenwand abgesenkt angeordnet sein.

Die Außenhülle kann gemäß einem bevorzugten Ausführungsbeispiel mit wenigstens einem Befestigungselement zur Halterung der Gasverteilungseinrichtung und des Gasgenerators versehen sein.

Ferner kann innerhalb der Außenhülle wenigstens eine insbesondere umlaufende Dichtung angeordnet sein, die mit dem Gasgenerator zusammenwirkt und das Ausströmen von Gas auf den Gasumlenkabschnitt begrenzt. Auf diese Weise wird sichergestellt, dass das Gas lediglich über den Gasumlenkabschnitt ausströmen kann. Ein Entweichen von Gas durch einen eventuell zwischen der Außenwand des Gasgenerators und der Innenwand der Außenhülle vorhandenen Zwischenraum kann durch das Vorsehen der Dichtung vermieden werden. Durch die Dichtung kann weiterhin erreicht werden, dass der Gasgenerator bei zusammengesetztem Modul gegen eine insbesondere in Längserstreckung der Außenhülle gerichtete Verschiebung relativ zur Gasverteilungseinrichtung gesichert ist. Die Dichtung kann beispielsweise durch Kleben, einen Dichtring oder eine beliebige andere Dichtung oder Dichttechnik gebildet sein.

Nach einer weiteren vorteilhaften Ausführungsform der Erfindung kann mindestens eine weitere Ausströmöffnung des Gasgenerators bei aufgenommenem Gasgenerator durch die Außenhülle verschlossen sein, wobei vorzugsweise die weitere Ausströmöffnung der dem Gasumlenkabschnitt zugeordneten Ausströmöffnung diametral gegenüberliegend angeordnet ist. Hierdurch wird erreicht, dass die weitere Ausströmöffnung des Gasgenerators, durch die kein Gas entweichen soll, derart verschlossen wird, dass zumindest kein signifikanter Anteil der Gesamtgasmenge des Gasgenerators durch diese Öffnung entweichen kann. Insbesondere kann ein schubfreier Gasgenerator mit beispielsweise zwei einander diametral gegenüberliegenden Ausströmöffnungen in Anwendungen, die lediglich eine Ausströmöffnung benötigen, verwendet werden.

Nachfolgend wird die Erfindung rein beispielhaft anhand einer vorteilhaften Ausführungsform und unter Bezugnahme auf die beigefügte Zeichnung beschrieben. Es zeigen:
- Fig. 1: eine perspektivische, schematische Ansicht einer erfindungsgemäßen Gasverteilungseinrichtung,
- Fig. 2: einen horizontalen, schematischen Längsschnitt durch eine erfindungsgemäße Gasverteilungseinrichtung; und
- Fig. 3a und 3b: vertikale, schematische Querschnitte durch eine erfindungsgemäße Gasverteilungseinrichtung im Bereich einer in einer Außenhülle ausgebildeten Vertiefung.

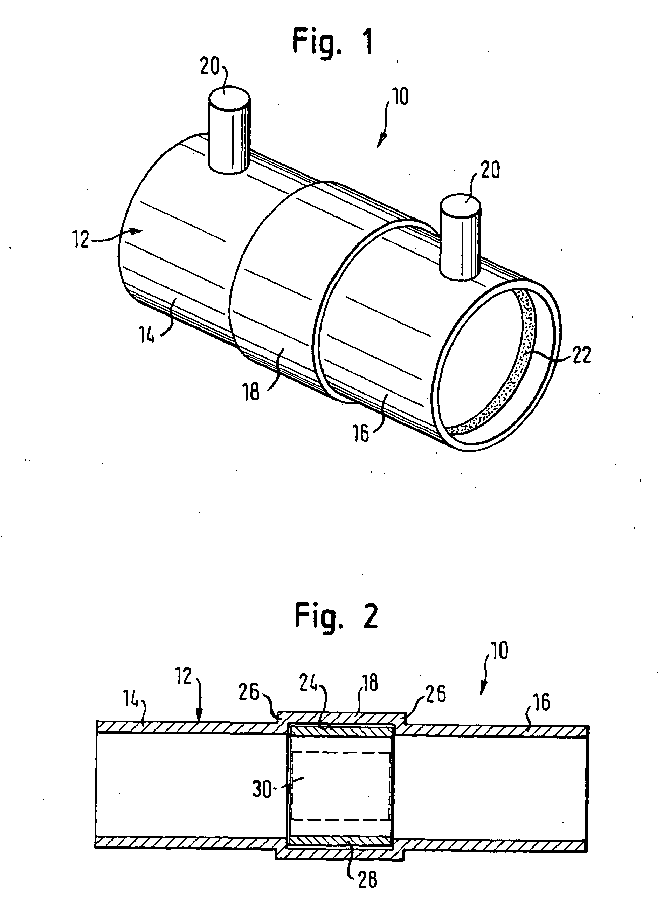

Das erfindungsgemäße Luftsackmodul umfasst gemäß Fig. 1 eine Gasverteilungseinrichtung 10 mit einer rohrförmig ausgebildeten Außenhülle 12, in die ein nicht dargestellter Gasgenerator eingeschoben werden kann. Die Längserstreckung des Gasgenerators ist insbesondere größer als die der Außenhülle 12, so dass die beiden Enden des Gasgenerators in axialer Richtung über Endabschnitte 14, 16 der Außenhülle 12 hinaus vorstehen können.

Die Außenhülle ist als Stahlmantel 12 ausgebildet, der den Gasgenerator bei zusammengesetztem Modul manschettenartig umfasst. Der relativ dicke Stahlmantel 12 kann dem Druck des nach dem Zünden des Gasgenerators ausströmenden Gases standhalten, so dass die Außenhülle 12 durch das ausströmende Gas nicht verformt wird.

Zwischen den beiden Endabschnitten 14, 16 weist die rohrförmige Außenhülle 12 einen Zwischenabschnitt 18 auf, dessen Außenradius größer ist als der der beiden Endabschnitte 14, 16. Der radial vorstehende, wulstartig umlaufende Zwischenabschnitt 18 kann insbesondere durch Ausbeulen oder Aufweiten der Außenhülle 12 gebildet sein.

Zur Halterung der Gasverteilungseinrichtung 10 sind zwei radial abstehende, zylinderförmige Befestigungszapfen 20 jeweils an einem der Endabschnitte 14, 16 der Außenhülle 12 angebracht.

An der Innenwand der Außenhülle 12 ist in den Bereichen der beiden Endabschnitte 14, 16 jeweils eine umlaufende Dichtung 22 vorgesehen, die bei zusammengesetztem Modul einen zwischen der Außenwand des Gasgenerators und der Innenwand der Außenhülle 12 gebildeten Zwischenraum in Richtung der beiden Enden der Außenhülle 12 nach außen abdichten. Aufgrund der perspektivischen Ansicht ist in Fig. 1 lediglich die Dichtung 22 des Endabschnitts 16 dargestellt.

Fig. 2 zeigt eine erfindungsgemäße Gasverteilungseinrichtung 10 in einem horizontalen Längsschnitt, wobei die Befestigungszapfen 20 und die Dichtungen 22 nicht dargestellt sind.

Der Innenradius des Zwischenabschnitts 18 ist größer als der der beiden Endabschnitte 14, 16, so dass in diesem Bereich eine umlaufende Vertiefüng 24 ausgebildet ist, wobei die Wandstärken der Abschnitte 14, 16, 18 im Wesentlichen gleich groß sind. Die zwischen den Endabschnitten 14, 16 und dem Zwischenabschnitt 18 gebildeten Übergangsbereiche 26 können in Abhängigkeit von den jeweiligen Herstellungsverfahren für den Zwischenabschnitt 18 von der in Fig. 2 gezeigten rechtwinkligen Form abweichen.

Bei zusammengesetztem Modul ist gemäß Fig. 2 ein geschlossener, streifenförmiger Haltering 28 in die Vertiefung 24 eingelegt. Der Haltering 28 kann seiner Wandstärke entsprechend mit den Innenwänden der Endabschnitte 14, 16 der Außenhülle 12 bündig abschließen oder relativ zu diesen radial nach innen oder außen versetzt sein. Der Haltering 28 kann zumindest bereichsweise an der Innenwand des Zwischenabschnitts 18 anliegen. Die sich in axialer Richtung der Außenhülle 12 erstreckende Breite des Halterings 28 entspricht im Wesentlichen der Breite der Vertiefung 24. Der Haltering ist als Stahlblechring 28 mit gegenüber dem Stahlmantel 12 geringerer Dicke ausgebildet, so dass dieser durch den Druck des nach dem Zünden des Gasgenerators ausströmenden Gases verformt werden kann.

Die Gasverteilungseinrichtung 10 weist ferner ein in der Außenhülle 12 ausgebildetes rechteckiges Fenster 30 auf, durch das ein an dem Haltering 28 ausgebildeter, an anderer Stelle näher erläuterter Gasumlenkabschnitt nach außen geführt ist. Das Fenster 30 ist an der den Befestigungszapfen 20 diametral gegenüberliegenden Seite der Außenhülle 12 und im Bereich des Zwischenabschnitts 18 ausgebildet. Die sich in axialer Richtung erstreckende Breite des Fensters 30 entspricht im Wesentlichen der Breite der Vertiefung 24 bzw. der Breite des Halterings 28.

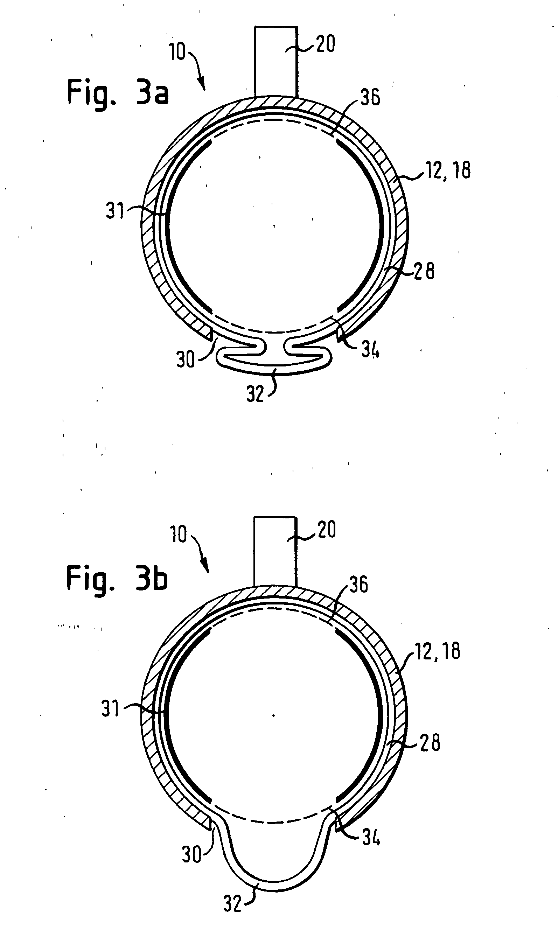

In den Fig. 3a und 3b ist eine erfindungsgemäße Gasverteilungseinrichtung 10 vor und nach dem Zünden des Gasgenerators 31 dargestellt.

An dem in die Vertiefung 24 des Zwischenabschnitts 18 eingelegten Haltering 28 ist der vorstehend bereits erwähnte Gasumlenkabschnitt 32 ausgebildet, der durch das in der Außenhülle 12 ausgebildete Fenster 30 nach außen geführt ist. Der Haltering 28 und der Gasumlenkabschnitt 32 sind einstückig ausgebildet, wobei der Gasumlenkabschnitt 32 ebenfalls streifenförmig ausgebildet ist und die Breite des Halterings 28 besitzt, wobei die Breiten des Gasumlenkabschnitts 32 und des Halterings 28 auch unterschiedlich sein können.

In Fig. 3a befindet sich der Gasumlenkabschnitt 32 in einer Platz sparenden, abgeflachten Montagekonfiguration, die durch eine zweifache S-förmige Faltung des Gasumlenkabschnitts 32 gebildet ist. Der gefaltete Gasumlenkabschnitt 32 ist teilweise im Fenster 30 der Außenhülle 12 und teilweise unmittelbar vor dem Fenster 30 angeordnet.

Nach dem Zünden des Gasgenerators befindet sich der Gasumlenkabschnitt 32 in einer entfalteten Betriebskonfiguration gemäß Fig. 3b, in der der Platzbedarf des Gasumlenkabschnitts 32 erhöht ist, da der Gasumlenkabschnitt 32 gegenüber der Montagekonfiguration radial weiter über die Außenhülle 12 hinaus nach außen vorsteht. Der Gasumlenkabschnitt 32 weist in der Betriebskonfiguration einen U-förmigen Querschnitt auf.

Der von der Außenhülle 12 aufgenommene Gasgenerator weist eine Ausströmöffnung 34 auf, die in den Fig. 3a und 3b jeweils durch eine gestrichelte Linie angedeutet ist. Die Außenhülle 12 und der Gasgenerator sind derart zueinander angeordnet, dass die Ausströmöffnung 34 im Bereich des Fensters 30 bzw. des durch das Fenster 30 hindurch geführten Gasumlenkabschnitts 32 gelegen ist.

Der Gasgenerator weist ferner eine weitere Ausströmöffnung 36 auf, die in den Fig. 3a und 3b ebenfalls jeweils durch eine gestrichelte Linie angedeutet ist. Die weitere Ausströmöffnung 36 liegt der Ausströmöffnung 34 diametral gegenüber und wird durch den Haltering 28 bzw. der in diesem Bereich geschlossenen Außenhülle 12 abgedeckt. Die Breite des Halterings 28 ist dabei derart gewählt, dass die weitere Ausströmöffnung 36 vollständig überdeckt ist.

Nachfolgend wird die Funktionsweise eines erfindungsgemäßen Luftsackmoduls unter Bezugnahme auf die Fig. 1 - 3 beschrieben.

Vor dem Zünden des Gasgenerators liegt der Gasumlenkabschnitt 32 in der in Fig. 3a gezeigten, zusammengefalteten und damit Platz sparenden Montagekonfiguration vor.

Nach dem Zünden des Gasgenerators tritt das aus dessen Ausströmöffnung 34 ausströmende Gas durch das Fenster 30 der Außenhülle 12 nach außen. Die Faltung des am Fenster 30 angeordneten Gasumlenkabschnitts 32 kann dem Druck des ausströmenden Gases nicht standhalten, so dass sich der Gasumlenkabschnitt 32 aus seiner Platz sparenden Montagekonfiguration unter Veränderung seiner äußeren Form schlagartig entfaltet. Der Gasumlenkabschnitt 32 wird gewissermaßen aufgeblasen.

Durch die Entfaltung nimmt die radiale Ausdehnung des Umlenkabschnitts 32 zu, so dass dieser relativ weit über die Außenhülle 12 hinaus radial nach außen vorsteht und der Umlenkabschnitts 32 in der entfalteten Betriebskonfiguration einen gegenüber der Montagekonfiguration erhöhten Platzbedarf aufweist. Die Form des entfalteten Gasumlenkabschnitts 32 wird durch den das Fenster 30 begrenzenden Randbereich der Außenhülle 12 mitbestimmt.

Nach der vollständigen Aufweitung liegt der Gasumlenkabschnitt 32 in der in Fig. 3b gezeigten Betriebskonfiguration vor. Das aus dem Gasgenerator ausströmende Gas wird durch den entfalteten, wannenförmig,ausgebildeten, axial offenen Gasumlenkabschnitt 32 gezielt umgelenkt und kann in beide Richtungen axial entweichen, um den nicht dargestellten Luftsack aufzublasen.

Die weitere Ausströmöffnung 36 des Gasgenerators ist durch den Haltering 28 abgedeckt, der an der in diesem Bereich geschlossenen Außenhülle 12 anliegt. Die Außenhülle 12 kann die Kräfte aufnehmen, die beim Zünden des Gasgenerators durch das ausströmende Gas über den Haltering 28 auf die Außenhülle 12 aufgebracht werden. Im Gegensatz zu dem gefalteten Gasumlenkabschnitt 32 ist der Haltering 28 aufgrund der unmittelbar angrenzenden Außenhülle 12 in dem Bereich der weiteren Ausströmöffnung 36 in seiner äußeren Form nicht veränderbar, so dass die weitere Ausströmöffnung 36 praktisch verschlossen bzw. dort ein hoher Strömungswiderstand vorhanden ist und zumindest kein signifikanter Anteil der Gesamtgasmenge des Gasgenerators durch die weitere Ausströmöffnung 36 ausströmen kann oder aus der weiteren Ausströmöffnung 36 ausströmendes Gas in Umfangsrichtung um den Gasgenerator herum zum Fenster 30 gelangt und dort ausströmt.

Eventuell in einen zwischen der Außenwand des Gasgenerators und der Innenwand der Außenhülle 12 vorhandenen Zwischenraum geströmtes Gas wird durch die Dichtungen 22 am Ausströmen in axialer Richtung gehindert, so dass das Ausströmen von Gas nach außen auf den Gasumlenkabschnitt 32 begrenzt ist.

Prinzipiell kann die Gasverteilungseinrichtung 10 auch einteilig ausgeführt sein, so dass der Gasumlenkabschnitt 32 direkt an der Außenhülle 12 ausgebildet ist. Die Stabilität der Außenhülle 12 und die Verformbarkeit des Gasumlenkabschnitts 32 können dabei beispielsweise durch eine reduzierte Wandstärke des Gasumlenkabschnitts 32 in Einklang gebracht werden.

Ein erfindungsgemäßes Luftsackmodul weist mit der Platz sparenden Montagekonfiguration und der die Gasumlenkfunktion erfüllenden Betriebskonfiguration des Gasumlenkabschnitts 32 eine flexibel verwendbare und an die jeweiligen Anforderungen anpassbare Gasverteilungseinrichtung 10 auf, wobei eine sichere und zuverlässige Funktionsweise des Luftsackmoduls gewährleistet ist.

### Bezugszeichenliste

- 10: Gasverteilungseinrichtung
- 12: Außenhülle
- 14: Endabschnitt
- 16: Endabschnitt
- 18: Zwischenabschnitt
- 20: Befestigungszapfen
- 22: Dichtung
- 24: Vertiefung
- 26: Übergangsbereich
- 28: Haltering
- 30: Fenster
- 31: Gasgenerator
- 32: Gasumlenkabschnitt
- 34: Ausströmöffnung
- 36: weitere Ausströmöffnung

## Patentansprüche

1. Luftsackmodul für Kraftfahrzeuge mit einem wenigstens eine Ausströmöffnung (34) aufweisenden Gasgenerator (31) und einer Gasverteilungseinrichtung (10), die eine Außenhülle (12) zur zumindest teilweisen Aufnahme des Gasgenerators und wenigstens einen bei aufgenommenem Gasgenerator im Bereich der Ausströmöffnung (34) des Gasgenerators gelegenen Gasumlenkabschnitt (32) umfasst, wobei der Gasumlenkabschnitt (32) durch das nach Zünden des Gasgenerators ausströmende Gas unter Verformung aus einer Platz sparenden Montagekonfiguration in eine die Gasumlenkfunktion erfüllende Betriebskonfiguration mit gegenüber der Montagekonfiguration erhöhtem Platzbedarf überführbar ist,
**dadurch gekennzeichnet,**
**dass** die Gasverteilungseinrichtung (10) mehrteilig ausgeführt und der Gasumlenkabschnitt (32) an einem separaten Halteelement (28) ausgebildet ist, das bei zusammengesetztem Luftsackmodul innerhalb der Außenhülle (12) angeordnet ist.

2. Luftsackmodul nach Anspruch 1,
**dadurch gekennzeichnet,**
**dass** der Gasumlenkabschnitt (32) in der Montagekonfiguration gefaltet, gestaucht, zusammengelegt und/oder eingeklappt ist.

3. Luftsackmodul nach Anspruch 1 oder 2,
**dadurch gekennzeichnet,**
**dass** die Außenhülle (12) ring-, hülsen- oder rohrförmig ausgebildet und auf den Gasgenerator aufschiebbar ist.

4. Luftsackmodul nach einem der vorhergehenden Ansprüche,
**dadurch gekennzeichnet,**
**dass** die Außenhülle (12) wenigstens ein bei aufgenommenem Gasgenerator im Bereich der Ausströmöffnung (34) gelegenes Fenster (30) aufweist und der Gasumlenkabschnitt (32) im Bereich des Fensters (30) angeordnet ist.

5. Luftsackmodul nach einem der vorhergehenden Ansprüche,
**dadurch gekennzeichnet,**
**dass** der Gasumlenkabschnitt (32) durch ein in der Außenhülle (12) ausgebildetes Fenster (30) nach außen geführt ist.

6. Luftsackmodul nach einem der vorhergehenden Ansprüche,
**dadurch gekennzeichnet,**
**dass** das Halteelement (28) ring- oder teilringförmig ausgebildet ist.

7. Luftsackmodul nach einem der vorhergehenden Ansprüche
**dadurch gekennzeichnet,**
**dass** die Außenhülle (12) an ihrer Innenwand eine Vertiefung (24) aufweist, in die das Halteelement (28) bei zusammengesetztem Luftsackmodul eingelegt ist.

8. Luftsackmodul nach einem der vorhergehenden Ansprüche
**dadurch gekennzeichnet,**
**dass** die Außenhülle (12) mit wenigstens einem Befestigungselement (20) zur Halterung der Gasverteilungseinrichtung (10) und des Gasgenerators versehen ist.

9. Luftsackmodul nach einem der vorhergehenden Ansprüche,
**dadurch gekennzeichnet,**
**dass** innerhalb der Außenhülle (12) wenigstens eine insbesondere umlaufende Dichtung (22) angeordnet ist, die mit dem Gasgenerator zusammenwirkt und das Ausströmen von Gas auf den Gasumlenkabschnitt (32) begrenzt.

10. Luftsackmodul nach einem der vorhergehenden Ansprüche,
**dadurch gekennzeichnet,**
**dass** mindestens eine weitere Ausströmöffnung (36) des Gasgenerators bei aufgenommenem Gasgenerator durch die Außenhülle (12) verschlossen ist, wobei vorzugsweise die weitere Ausströmöffnung (36) der dem Gasumlenkabschnitt (32) zugeordneten Ausströmöffnung (34) diametral gegenüberliegend angeordnet ist.

## Claims

1. An airbag module for motor vehicles comprising a gas generator (31) having at least one outflow aperture (34) and a gas distribution device (10) which includes an outer envelope (12) for the at least partial reception of the gas generator and at least one gas deflection section (32) disposed in the region of the outflow aperture (34) of the gas generator when the gas generator has been received, wherein the gas deflection section (32) can be moved by the outflowing gas while being deformed after the ignition of the gas generator from a space saving installation configuration into an operating configuration satisfying the gas deflection function and with increased space requirements with respect to the installation configuration, **characterized in that** the gas distribution device (10) is made in multiple parts and the gas deflection section (32) is formed at a separate holding element (28) which is arranged inside the outer envelope (12) when the airbag module has been assembled.

2. An airbag module in accordance with claim 1, **characterized in that** the gas deflection section (32) is folded, compressed, folded up and/or folded inward in the installation configuration.

3. An airbag module in accordance with claim 1 or claim 2, **characterized in that** the outer envelope (12) is made in ring shape, sleeve shape or tubular shape and can be pushed onto the gas generator.

4. An airbag module in accordance with any one of the preceding claims, **characterized in that** the outer envelope (12) has at least one window (30) disposed in the region of the outflow aperture (34) with the received gas generator and the gas deflection section (32) is arranged in the region of the window (30).

5. An airbag module in accordance with any one of the preceding claims, **characterized in that** the gas deflection section (32) is outwardly guided through a window (30) formed in the outer envelope (12).

6. An airbag module in accordance with any one of the preceding claims, **characterized in that** the holding element (28) is ring shaped or partly ring shaped.

7. An airbag module in accordance with any one of the preceding claims, **characterized in that** the outer envelope (12) has a recess (24) at its inner wall into which the holding element (28) is inserted when the airbag module is assembled.

8. An airbag module in accordance with any one of the preceding claims, **characterized in that** the outer envelope (12) is provided with at least one fastening element (20) for the holding of the gas distribution device (10) and of the gas generator.

9. An airbag module in accordance with any one of the preceding claims, **characterized in that** at least one seal (22), in particular a peripheral seal, is arranged inside the outer envelope (12), said seal cooperating with the gas generator and restricting the outflow of gas onto the gas deflection section (32).

10. An airbag module in accordance with any one of the preceding claims, **characterized in that** at least one further outflow aperture (36) of the gas generator is closed by the outer envelope (12) when the gas generator has been received, with the further outflow aperture (36) preferably being arranged diametrically opposite the outflow opening (34) associated with the gas deflection section (32).

## Revendications

1. Module de sac gonflable de sécurité pour véhicules automobiles comprenant un générateur de gaz (31) ayant au moins une ouverture d'échappement (34), et un dispositif diffuseur de gaz (10), qui comprend une enveloppe extérieure (12) permettant de recevoir au moins partiellement le générateur de gaz et au moins une partie de renvoi des gaz (32) située au niveau de l'ouverture d'échappement (34) lorsque le générateur de gaz est installé, la partie de renvoi des gaz (32) pouvant être amenée, en se déformant sous l'action des gaz expulsés après l'allumage du générateur de gaz, d'une configuration de montage à faible encombrement à une configuration de fonctionnement remplissant la fonction de renvoi des gaz occupant un espace plus important par rapport à la configuration de montage,
**caractérisé en ce que**
le dispositif diffuseur de gaz (10) est réalisé en plusieurs parties, et que la partie de renvoi des gaz (32) est formée sur un élément de maintien séparé (28) qui, à l'état assemblé du module de sac gonflable de sécurité, se situe à l'intérieur de l'enveloppe extérieure (12).

2. Module de sac gonflable de sécurité selon la revendication 1,
**caractérisé en ce que**
en configuration de montage, la partie de renvoi des gaz (32) est repliée, refoulée, plissée et/ou rabattue.

3. Module de sac gonflable de sécurité selon la revendication 1 ou 2,
**caractérisé en ce que**
l'enveloppe extérieure (12) est réalisée sous forme d'une bague, douille, ou d'un tube, et peut être emmanchée sur le générateur de gaz.

4. Module de sac gonflable de sécurité selon l'une des revendications précédentes,
**caractérisé en ce que**
l'enveloppe extérieure (12) comporte au moins une fenêtre (30) située au niveau de l'ouverture d'échappement (34), lorsque le générateur de gaz est installé, et que la partie de renvoi des gaz (32) est disposée au voisinage de la fenêtre (30).

5. Module de sac gonflable de sécurité selon l'une des revendications précédentes,
**caractérisé en ce que**
la partie de renvoi des gaz (32) est amenée à l'extérieur, à travers une fenêtre (30) formée dans l'enveloppe extérieure (12).

6. Module de sac gonflable de sécurité selon l'une des revendications précédentes,
**caractérisé en ce que**
l'élément de maintien (28) est configuré en forme d'anneau ou d'anneau partiel.

7. Module de sac gonflable de sécurité selon l'une des revendications précédentes,
**caractérisé en ce que**
l'enveloppe extérieure (12) comporte un renfoncement (24) ménagé dans sa paroi intérieure, renfoncement dans lequel vient se loger l'élément de maintien (28) lorsque le module de sac gonflable de sécurité est assemblé.

8. Module de sac gonflable de sécurité selon l'une des revendications précédentes,
**caractérisé en ce que**
l'enveloppe extérieure (12) est pourvue d'au moins un élément de fixation (20) permettant la fixation du dispositif diffuseur de gaz (10) et du générateur de gaz.

9. Module de sac gonflable de sécurité selon l'une des revendications précédentes,
**caractérisé en ce**
**qu'**au moins un joint d'étanchéité (22) notamment périphérique est disposé à l'intérieur de l'enveloppe extérieure (12), joint qui coopère avec le générateur de gaz et limite l'échappement de gaz hors de la partie de renvoi des gaz (32).

10. Module de sac gonflable de sécurité selon l'une des revendications précédentes,
**caractérisé en ce**
**qu'**au moins une autre ouverture d'échappement (36) du générateur de gaz est obturée par l'enveloppe extérieure (12) lorsque le générateur de gaz est installé, ladite au moins une ouverture d'échappement supplémentaire (36) étant alors disposée de préférence diamétralement à l'opposé de l'ouverture d'échappement (34) associée à la partie de renvoi des gaz (32).
